# EUROPEAN PATENT APPLICATION

(11) **EP 4 850 806 A1**
(43) Date of publication of application: **09.12.2026**
(21) Application number: 25180477.9
(22) Date of filing: 03.06.2025
(51) Int. Cl.: B01J 19/08

(54) **REACTOR FOR CATALYTIC AND CHEMICAL REACTIONS FACILITATED BY PLASMA ENVIRONMENTS, PROCESSES AND USES**

(71) Applicant: Karlsruher Institut für Technologie, 76131 Karlsruhe (DE)
(72) Inventor: Dr. Navarrete Munoz, Alexander, 76185 Karlsruhe (DE); Dr. Dittmeyer, Roland, 76133 Karlsruhe (DE); Hernandez, Mery, 76344 Karlsruhe (DE)
(74) Representative: Meissner Bolte Düsseldorf Patentanwälte Rechtsanwälte Partnerschaft mbB

(57) **Abstract**

The present invention is directed to chemical and catalytic reactions facilitated by plasma environments, including both gas-phase and plasma-liquid interfaces via employment of plasma jet-based reactors, in particular the preparation of hydrogen peroxide from water.

## Description

The present invention is directed to chemical and catalytic reactions facilitated by plasma environments, including both gas-phase and plasma-liquid interfaces via employment of plasma jet-based reactors, in particular the preparation of hydrogen peroxide from water.

It should be understood that this invention is not limited to the embodiments disclosed in this summary, or the description that follows, but is intended to cover modifications that are within the spirit and scope of the invention, as defined by the claims.

In the present application, including the claims, other than in the operating examples or where otherwise indicated, all numbers expressing quantities or characteristics are to be understood as being modified in all instances by the term "about". Accordingly, unless indicated to the contrary, any numerical parameters set forth in the following description may vary depending on the desired properties one seeks to obtain in the compositions and methods according to the present disclosure. At the very least, and not as an attempt to limit the application of the doctrine of equivalents to the scope of the claims, each numerical parameter described in the present description should at least be construed in light of the number of reported significant digits and by applying ordinary rounding techniques.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10. The terms "one," "a," or "an" as used herein are intended to include "at least one" or "one or more," unless otherwise indicated.

Any patent, publication, or other disclosure material, in whole or in part, that is said to be incorporated by reference herein is incorporated herein only to the extent that the incorporated material does not conflict with existing definitions, statements, or other disclosure material set forth in this disclosure. As such, and to the extent necessary, the disclosure as set forth herein supersedes any conflicting material incorporated herein by reference. Any material, or portion thereof, that is said to be incorporated by reference herein, but which conflicts with existing definitions, statements, or other disclosure material set forth herein is only incorporated to the extent that no conflict arises between that incorporated material and the existing disclosure material.

### Background of the invention:

The chemical industry faces significant challenges in transitioning towards carbon neutrality. Conventional processes for synthesizing products like hydrogen peroxide (H₂O₂) and other chemicals rely heavily on centralized production, hazardous feedstocks or waste, and energy-intensive methods, leading to high environmental and economic costs.

This creates the need for electrified, modular, and flexible chemical production systems that can efficiently convert a variety of liquid and gas feedstocks into valuable, ready to use, chemical products while minimizing waste and environmental impact.

Hydrogen peroxide (H₂O₂) is a clean oxidant with many potential applications in green chemistry, but its production has a high environmental burden, is based on fossil resources and is rather costly at low scale. Electrification of this process is required in the future, therefore cheaper and cleaner routes to electricity based H₂O₂ are necessary. Moreover, the possibility of on-demand, modular plants would enable a more widespread use of this clean oxidant. Finally, providing a load-flexible production method would expand opportunities for management in the power distribution grid.

In the state-of-the-art several documents can be found that describe possibilities for the production of hydrogen peroxide with the aid of plasma reactors.

Cameli, Fabio, et al. "Modular plasma microreactor for intensified hydrogen peroxide production." ACS Sustainable Chemistry & Engineering 10.5 (2022): 1829-1838 describe modular plasma microreactors with maximum concentrations of 30 mmol/I at liquid flow rates lower than 0.1 ml/min, limiting scalability.

J. Liu et al., "Direct synthesis of hydrogen peroxide from plasma-water interactions," Sci Rep, vol. 6, Dec. 2016, doi: 10.1038/srep38454 demonstrates direct plasma-water interactions but do not address scalability challenges.

R. Burlica, K. Y. Shih, and B. R. Locke, "Formation of H2 and H2O2 in a water-spray gliding arc nonthermal plasma reactor," Ind Eng Chem Res, vol. 49, no. 14, pp. 6342-6349, Jul. 2010, doi: 10.1021/ie100038g examine water-spray gliding arc reactors with high energy efficiency, however, concentrations of H₂O₂ remain below 15 mmol/l, limiting upscaling or small scale application.

Hsieh, Kevin C., Huihui Wang, and Bruce R. Locke. "Analysis of Electrical Discharge Plasma in a Gas-Liquid Flow Reactor Using Optical Emission Spectroscopy and the Formation of Hydrogen Peroxide." Plasma Processes and Polymers 13.9 (2016): 908-917 focus on optical diagnostics of plasma discharge in argon, air and helium gases, achieving maximum H₂O₂ concentrations around 30 mmol/ using argon.

For the case of H₂O₂, the state-of-the-art lacks technologies for continuous, decentralized and on-demand production of hydrogen peroxide at concentrations apt for water treatment or disinfection applications (usually 0.5-1.0%; about 150 mmol/l to 300 mmol/l) and its set-ups still need improvement with regard to flexibility and tunability.

However, there still is a need for reactors and processes that improve upon the prior state-of-the-art.

### Objects of the invention:

It was accordingly an object of the present invention to provide reactors and processes that allow for improved preparation of on-demand chemicals in a continuous manner.

It was a further object of the invention to provide devices and methods that address the shortcomings of the prior art and ideally add further improvements and advantages.

Further objects will become apparent to those skilled in the art upon regarding the following disclosure.

### Solution of the Invention:

These and other objects are solved by the subject matter outlined in the independent claims.

Preferred embodiments are outlined in the dependent claims as well as the following description.

### Detailed description:

In the present invention, unless otherwise specified, the reactions are conducted at room temperature, which is understood as being 20°C.

In the present invention, unless otherwise specified, the reactions are conducted at ambient pressure, which is understood as being 101,325 kPa.

In the present invention, the term "plasma jet" describes a commonly known device which is used to generate plasma. This device is sometimes also called "plasma torch" and both terms can be used interchangeably. Such a device comprises an inner tube through which the reactants are fed having a nozzle (dispensing nozzle) at its end, an outer tube surrounding the inner tube while leaving a gap between them and having a tip (jet tip) at its end through which the plasma and substances streams exit.

The present invention provides a new reactor and a new method, both of which are suitable for load-flexible electricity-based synthesis of important chemicals.

A first subject matter of the present invention is a reactor comprising:
a) a plasma jet, preferably a coaxial plasma torch, comprising
   - an inner, preferably metallic, tube for dosing liquid having a dispensing nozzle through which the liquid is dispensed,
   - an outer tube arranged to surround the inner tube while leaving a gap between its inner surface and the outer surface of the inner tube for dosing inert gas through the gap,
      wherein
   - the outer tube has a jet tip region with gradually narrowing dimensions to concentrate the liquid, the gas and the electrical fields, and
      wherein
   - the outer tube is longer than the inner tube so that the end of the inner tube's dispensing nozzle reaches into the jet tip region but does not reach to the narrowest part of the jet tip region,
      and wherein
   - the inner space between the dispensing nozzle and the inner surfaces of the jet tip region forms a plasma ignition zone;
b) a plasma cooling device arranged downstream of the plasma jet;
c) a housing in which the plasma jet and the cooling device are accommodated.

In the context of the present invention in principle any plasma jet/ plasma known in the art and readily available can be used.

The inner tube can be made of any suitable material (i.e. suitable for the specific desired reaction), though in preferred embodiments it is a metallic inner tube.

The geometry of the inner tube is also not particularly limited, though it is preferably round it may also be triangular, quadrangular, pentagonal or of any other geometry. It should be noted though, that the geometry is preferably adapted to correspond to the geometry of the outer tube, i.e. the inner tube and the outer tube preferably have the same geometry so that the gap between those two tubes is of the same width around the entire circumference.

Consequently, the outer tube is preferably round but may also be triangular, quadrangular, pentagonal or of any other geometry.

Thus, the geometries of the tubes are preferably the same apart from their dimensions.

While the geometry of the plasma jet and the arrangement of inner and outer tube is not particularly limited, it is preferred to employ a coaxial arrangement.

As usual, the outer tube has a jet tip region with, in the direction of flow, gradually narrowing dimensions to concentrate the liquid, the gas and the electrical fields. The narrowing dimensions are preferably a diameter, i.e. the narrowing region is preferably round, as in preferred embodiments both the inner tube and outer tube are round and arranged coaxially.

It should be noted that the inner tube's walls may be formed as a mantle through which inert gas can be flown.

The outer surface of the inner tube can act as inner conductor of the plasma jet and the inner surface of the outer tube of the plasma jet can act as the outer conductor of the plasma jet.

The outer tube is longer than the inner tube, in the direction of flow, so that the end of the inner tube's dispensing nozzle reaches into the jet tip region but does not reach to the narrowest part, i.e. its end in the direction of flow, of the jet tip region.

It should be noted that the above description of the plasma jet is, in principle, known to the person skilled in the art and the person skilled in the art can chose the specific plasma torch to be used based on his general knowledge.

In preferred embodiments of the present invention, the plasma jet is an atmospheric pressure plasma jet operated with microwaves.

In one specific preferred embodiment a torch model SF-011 HHF- Technik GmbH with an RF 4.310 connector, is employed as the plasma jet.

The housing in which the plasma jet and the cooling device are accommodated can include the entireties of both the plasma jet and the cooling device, or only parts.

In one preferred embodiment of the present invention, the housing is a tube that is attached to the outer surface of the plasma jet, so that the plasma jet's tip and the cooling device as well as the plasma-liquid interaction zone, the cooling zone and, optionally some additional space around those and in the direction of flow beyond them, are present inside the housing.

The housing can be made of any material suitable for the chosen reaction, i.e. it has to withstand the compounds/entities present as well as the conditions. Preferably, the housing is made of (or coated with) a material selected from the group consisting of stainless steel, quartz glass, nickel alloys, aluminium, titanium, tantalum, zirconium and composites thereof.

The reactor of the present invention is configured to receive energy necessary for the plasma generation from a suitable energy source (or, in some embodiments, several energy sources).

In some preferred embodiments, the energy source and the reactor as outlined above are produced as a single device, i.e. in these embodiments the reactor comprises the energy source.

The energy source preferably is a microwave energy generator that is configured to provide pulsed microwave energy, especially as pulses in the nanosecond range, to the reactor, in particular the plasma jet.

The gas to be flown through the gap between inner and outer tube can be designated as carrier gas or shielding gas or propellant gas. This is known to the person skilled in the art and those terms can be used as synonyms in this context of the present invention.

In some preferred embodiments of the present invention, the inner tube for dosing liquid comprises a modified dispensing nozzle.

Normally the nozzle of such inner tubes of plasma jets is just the end of the tube being open.

According to the present invention, the dispensing nozzle is modified by the addition of an extra component, analogous to a cap, which functions as a nozzle, or the existing dispensing nozzle/downstream end of the inner tube is modified.

In preferred embodiments, the employed plasma jet has a modified dispensing nozzle that has a specific geometry, preferably selected from, but not limited to, the following:
- a conical nozzle; or
- a flat nozzle; or
- a dome-shaped nozzle; or
- a nozzle with a hexagonal cross section; or
- a concave hemispherical nozzle (an inverted dome shaped nozzle); particularly a conical nozzle or a dome shaped nozzle, especially a conical nozzle.

The circumferential geometry and dimensions of the modified dispensing nozzle are preferably the same as those of the inner tube itself. In some embodiments of the present invention it is, however, also possible to make modifications to the circumferential geometry and dimensions, as these might be beneficial if another microwave applicator or if another kind of plasma is used.

Additionally, the modified dispensing nozzle has at least one opening in the form of a microhole.

If the modified dispensing nozzle only has one microhole, the microhole is preferably arranged at the top of the dispensing nozzle.

If the dispensing nozzle has a flat end and only one microhole, the microhole either has the same, or, preferably, a smaller diameter than the inner diameter of the inner tube.

If the modified dispensing nozzle has more than one microhole, than these microholes can be arranged in various ways.

In some embodiments, the modified dispensing nozzle has one microhole at its top and at least one microhole, preferably more than one microhole, on its circumferential surface.

In the, preferred, case that more than one microhole is present on the circumferential surface of the dispensing nozzle, it is advantageous and thus preferred, to arrange the microholes spaced apart on the circumferential surface of the nozzle equidistantly. If more than one microhole is present on the circumferential surface of the dispensing nozzle, the microholes can be arranged on the same height or on different heights of the circumferential surface. The height of the circumferential surface in this context means the distance between the attachment plane of the dispensing nozzle to the inner tube and the plane, being perpendicular to the main symmetry axis of the inner tube, on which the respective microhole is present; in this context the hole on the outside of the dispensing nozzle is taken into account, not the hole on the inner surface (relevant if the passages formed by the holes are not straight through-holes perpendicular to the main symmetry axis of the inner tube).

It is preferred to arrange microholes, that are present on the same height of the circumferential surface of the dispensing nozzle, spaced apart equidistantly.

It should be noted that microholes are preferably arranged on (being the case for only one microhole) or symmetrically around the main symmetry axis of the inner tube. Such symmetrical arrangement leads to improved flow characteristics versus asymmetrical placement of microholes.

In preferred embodiments two or more microholes, more preferably two, or three, or four, or five, or six, or seven, of eight, or nine, or ten microholes, are present on the circumferential surface of the modified dispensing nozzle. In some embodiments even numbers of microholes are preferred as they can be easier produced, e.g. by drilling through the entire dispensing nozzle thus creating two opposing holes. These embodiments are in particular preferred if the dispensing nozzles are made by drilling holes into an existing nozzle of a certain geometry. However, it is also possible to produce the modified dispensing nozzles by additive manufacturing, in which case the microholes are created during printing, in which case even or odd numbers of microholes are not preferred over the other.

Accordingly, the modified dispensing nozzles can be prepared by re-shaping the end of an existing inner tube, or, preferably, they can be prepared separately and then added to an existing inner tube, for example by providing a workpiece of the relevant dimensions and then drilling the desired holes/microholes in it.

Some preferred embodiments of multiple microholes on the circumferential surface of the modified dispensing nozzle are four in two rows at two different heights (forming a zig-zag-type of pattern), four in one row at one height, eight in two rows of four each at two different heights.

In this context (the context of the present invention), the term "microhole" in particular means a hole having a diameter of from 100 µm to 300 µm.

These microholes are holes that connect the outside of the dispensing nozzle with its inside, i.e. they are through holes (through the nozzle's wall). These through holes can go through the dispensing nozzle in an angle that is perpendicular to the main symmetry axis of the inner tube, which is a preferred embodiment, or in an angle different than 90°. The channels formed by the microholes may be straight or non-straight, e.g. curved, whereby the latter are usually only present if the modified dispensing nozzle is formed by additive manufacturing but not by drilling.

In one preferred embodiment of the present invention, microholes were arranged around the end of the inner tube/dispensing nozzle, covering 360°, with one hole each 90°C, resulting in four equidistantly spaced holes.

In another preferred embodiment of the present invention, microholes were arranged in two rows, wherein each row had four holes. The first row was located 1 mm away from the nozzle bottom (the plane where the nozzle is attached to the tube), and the second row was 1.5 mm away from the nozzle bottom. The second row was shifted 45° in relation to the first row (i.e. arranged in a staggered manner with respect to the first row), giving a kind of twirling movement of the fluid. In this context, possible distributions for the first row of microholes would be at 1 mm from the nozzle bottom, and microholes at 0°, 90°, 180°, 270° of the circumference, then a second row at 1.5 mm from the nozzle bottom, and microholes at 45°, 135°, 225°, 315°.

Of course, the present invention is not limited to these exemplary arrangements and, in principle, any number of rows and any number of microholes in any kind of (geometrical) arrangement on the dispensing nozzle is possible (provided that practical limits are kept, e.g. too many holes would make the nozzle unstable etc.).

These modifications have some advantageous effects, two of which are:
Dispensing nozzles having at least one microhole improve the mixing of the liquid and the gas, which, in turn, leads to improved flow characteristics.

The specific geometry of the dispensing nozzle affects the electromagnetic field formation, which, in turn, leads to improved plasma formation.

Particularly preferred are dispensing nozzles selected from the group consisting of flat nozzles with four circumferential microholes, conical nozzles with four circumferential microholes, conical nozzles with four circumferential microholes in two rows of two, conical nozzles with eight circumferential microholes in two rows of four and conical nozzles with one microhole at the top.

In some preferred embodiments of the present invention, the dispensing nozzle as well is the inner side of the jet tip are passivated, preferably by contacting the surfaces to be passivated with a gas selected from oxygen, nitrogen and mixtures thereof, more preferably a nitrogen-oxygen mixture, preferably in ratios between 4:1 and 1:4, more preferably 3.75:1, in particular in a ratio of 1:1.

To aid the flow of the substances that cause the passivation, inert gases, preferably argon or helium can be used in some preferred embodiments of the present invention.

In some preferred embodiments of the present invention, the cooling device has a special geometry, adapted to rapidly cool substances passing by/through it.

In some preferred embodiments of the present invention, the cooling device is a stainless-steel coil made of a 1/8" outer diameter stainless steel tube (an eighth of an inch; 0.125 cm).

In the case of the cooling device being a cooling coil, the central axis of the cooling coil is preferably aligned with the central axis of the plasma jet, more preferably is the same axis (in other words lies on the central axis of the plasma jet). This arrangement has the advantage that the product stream can flow straight on its direction of flow through the centre of the cooling coil. In this way, a very effective cooling is achieved.

It should be noted, that, in particular, in view of the geometries of reactor, plasma jet and the direction of flow downstream of the plasma jet, it is preferable in the present invention, that the reactor is arranged with its main symmetry axis being perpendicular to the ground and the direction of flow is directed toward the ground.

In some preferred embodiments of the present invention the reactor comprises a microwave source for providing the energy for forming the plasma in a pulsed manner, preferably nanosecond pulses. It has been found in the context of the present invention, that at the same energy input level pulsed energy often leads to higher yields than continuous power input.

A further subject matter of the present invention is a continuous process for conducting a chemical reaction with the aid of a plasma jet, the process comprising
- providing a reactor according to the present invention and as described in detail above and below; and
- supplying a liquid to the inner tube, preferably at a predetermined and set flow rate; and
- supplying gas to the outer tube, preferably at a predetermined and set flow rate; and
- providing power to the plasma jet by a microwave source; and
- immediately after the plasma-liquid interaction zone, cooling the product stream to a temperature of between 100°C to 20°C;
- collecting the product stream, preferably via condensation;
- and optionally separating the desired product from other components of the product stream;
- and optionally recycling some or all of said other components,
wherein the microwave power is supplied in pulsed form.

The temperature to which the product stream is cooled, is dependent on the experimental conditions for plasma ignition (as would be apparent to the person skilled in the art.

In the present invention, a pulse is a single repetition unit of a repeating, continuous on-off-signal, wherein each repetition unit has a certain on-time in which power is applied and a certain off-time, where no power is applied. The sum of the time-on and time-off of a single pulse is the period.

The flow rates of the liquids and gases in the context of the present invention are predetermined and set to values that lead to particularly improved yields and/or more stable reactions and/or products.

The collection of the product stream, including the desired product, can be collected by any of the methods known in the art suitable for the respective circumstances (e.g. temperature, nature of the compounds etc.). One example would be to condense the products and collect them in glass vials, containers or the like. Due to one of the specific features of the present invention's method - the cooling of the product stream - in most instances several components/compounds would already condensate due to the temperature drop and the fact that they are liquid under the conditions after the cooling step. As oftentimes compounds in this product stream are miscible with each other, they might have to be separated partly or entirely by separation techniques known in the art.

However, sometimes it might even be desirable to use to miscibility of compounds to obtain a product that is more stable, for example upon storage, than the compounds (or certain ones) on their own.

For example, in the preferred embodiment of the preparation of hydrogen peroxide from water and cooling to about 20°C or lower (for example 18°C), both residual water as well as hydrogen peroxide would be liquid and are miscible with each other. However, hydrogen peroxide in pure form is pretty unstable and as such is mostly used as an aqueous mixture anyway, so that in that example the mixture may be collected as is and only the gases are branched off.

As the products of the plasma-liquid interaction are mixtures of various components (compounds) it is, however, often necessary to separate them from each other as otherwise the mixtures might change their composition due to further reactions between components and/or instabilities. Additionally, separating the desired product from unwanted components/compounds is obviously necessary in order to get the pure product. The separation can be done by methods known in the art.

That means that in the context of the present invention the power is preferably not supplied to the plasma jet as a continuous power supply.

In some particularly preferred embodiments of the present invention
- the reaction is the preparation of hydrogen peroxide from water; and
- the liquid is water; and
- the gas is an inert gas, preferably selected from the group consisting of air, argon, helium, nitrogen, oxygen and mixtures thereof, in particular argon; and
- the product is cooled to a temperature of 100°C to 20°C.

In some preferred embodiments of the present invention, any, some or all, preferably all of the following parameters are set:
i) flow rate water of from 0.05 ml/min to 5000 ml/min, preferably from 0.05 ml/min to 100 ml/min, in particular from 0.05 ml/min to 10 ml/min;
ii) flow rate of gas of from 1 L/min to 20 L/min, preferably 2 L/min to 10 L/min;
iii) microwave input power applied to the plasma jet of from 100 W to 50 kW, preferably from 100 W to 1000 W;
iv) time of active pulse of the microwave pulses of from 100 ns to 10000 ns;
v) time complete period of from 150 ns to 11000 ns;
vi) duty cycle, being the fraction of time of active pulse over the complete period, of from 0.1 to 0.9.

In some further preferred embodiments of the present invention, any, some or all, preferably all of the following parameters are set:
i) flow rate water of from 0.05 ml/min to 10 ml/min;
ii) flow rate of gas of from 2 L/min to 10 L/min;
iii) microwave input power applied to the plasma jet of from 100 W to 1000 W;
iv) time of active pulse of the microwave pulses of from 100 ns to 10000 ns;
v) time complete period of from 150 ns to 11000 ns;
vi) duty cycle, being the fraction of time of active pulse over the complete period, of from 0.1 to 0.9.

In still some further preferred embodiments of the present invention, the following set of parameters is preferable for hydrogen peroxide production from water:
i) flow rate of water from 0.2 ml/min to 2.5 ml/min;
ii) flow rate of argon from 5 L/min to 8 L/min;
iii) microwave input power applied to the plasma jet from 200 W to 700 W:
iv) time of active pulse of the microwave pulses from 500 ns to 1200 ns;
v) time complete period of from 150 ns to 11000 ns;
vi) duty cycle, being the fraction of time of active pulse over the complete period, of from 0.2 to 0.4. These preferred parameters i) to vi) make it possible to adjust the temperatures surrounding the plasma-water interface to between 25°C and 50°C. Accordingly, and as plasma temperatures in this range have been proven to lead to particularly good yields in the context of the present invention, these are preferred in certain embodiments of the present invention.

Still a further subject matter of the present invention is the use of the reactor according to the present invention of the method according to the invention and as described in detail above and below for converting gases or liquids, preferably water or other liquids, particularly water, alcohols, organic solvents like methanol, aqueous mixtures, into valuable chemicals, in particularly selected from the group consisting of hydrogen peroxide, nitric acid, ammonia, methanol and mixtures thereof.

One particularly preferred embodiment of the present invention is the synthesis of hydrogen peroxide directly from water.

It should be noted that the present invention is not limited to the above-mentioned gases, liquids and valuable chemicals, but can be applied to many other educts and products.

One preferred embodiment of the present invention is the employment of several reactors according to the invention in parallel, i.e. an array of reactors according to the invention is set up, so that the throughput and yield per time can be significantly increased. For this purpose, simply at least two reactors according to the invention are arranged close to each other and the feed streams are split up to provide a (continuous) supply to each of the reactors. Similarly, the products of each reactor can be collected and all of those, or some, can be combined.

The distribution of the feed to the individual reactors need not be identical but can be different, in embodiments even individual, to each individual reactor. The same goes for the product collection.

It is, however, most often easier and simpler to supply and collect evenly (apart from fluctuation caused by individual parts of the array).

The reactor arrays according to the invention thus comprise at least two reactors according to the invention, preferably at least three reactors according to the invention, more preferably at least four reactors according to the invention, even more preferably at least five reactors according to the invention and most preferably more than six reactors according to the invention, while there is no upper number of reactors according to the invention for the arrays according to the invention and the number is only limited by practical circumstances and/or the desired application.

With these reactor arrays according to the invention it is possible to, inter alia, prepare large amounts of the same product on a small volume and in a short time, or different products on a small volume and in a short time, the latter being for example suitable for screening tests or the like.

The temperature of the gas entering the plasma-liquid interaction zone of the reactor is not only dependant on the microwave power but also on the gas and liquid flow rates.

The gas flow rate and water flow rate variations can modify the plasma-liquid interaction and ionic species formation as well as residence time.

In the present invention, the mixture of the plasma-liquid (or plasma-gas) phases is improved by using a plasma jet with an inner tube having a modified dispensing nozzle for feeding the liquid (or gas) introduced to the plasma jet into the plasma zone.

The modified dispensing nozzle is obtained by modifying the structure of the nozzle, in particular by added microholes on or through the outer surface. In addition, in some further embodiments the material of the nozzle can also be modified, preferably by using metals like copper, iron or titanium).

In one preferred embodiment of the present invention, a standard dispensing tube with a size of 1.8 mm (outside diameter) is used and the size of the holes added to/through the outer surface of the nozzle is about 200 µm in diameter, and the modified nozzle has a length of 3 mm.

The geometry of the dispensing nozzle and the arrangement of the microholes can also be modified.

For example, a first preferred modification includes two parallel rows of four microholes each (preferably microholes of about 200 µm diameter), located at 1 mm and 1.5 mm away from the bottom of the nozzle, respectively (i.e. at a height of 1 mm and 1.5 mm from the bottom of the nozzle, i.e. the connection plane to the tube, respectively), and the holes in each row are separated each 90° around the conic shaped nozzle (i.e. the holes of each row are spaced apart equidistantly to each other).

A second preferred modification uses one row of four microholes, separated each 90° around a conically shaped nozzle (i.e. the holes of the row are spaced apart equidistantly to each other), and located at 1 mm away from the bottom of the nozzle (i.e. at a height of 1 mm and 1.5 mm from the bottom of the nozzle, i.e. the connection plane to the tube).

A third modification uses four microholes in a conically shaped nozzle, wherein two microholes are located at 1 mm away from the bottom of the nozzle and two other microholes are located 1.5 mm away from the bottom of the nozzle (i.e. at a height of 1 mm and 1.5 mm from the bottom of the nozzle, i.e. the connection plane to the tube), wherein the microholes of the respective pairs are opposite each other and the second pair of microholes is displaced 90° in relation to the first pair of two microholes.

A fourth preferred modification uses the geometry of the normal tube with a close end cylinder-shaped nozzle (flat nozzle), and one row of four microholes on the side of the cylinder, at 1 mm away from the bottom of the nozzle (i.e. at a height of 1 mm from the bottom of the nozzle, i.e. the connection plane to the tube) and located each 90° around the cylinder nozzle (i.e. the holes of the row are spaced apart equidistantly to each other).

If microholes are arranged in two or more rows over each other, with respect to the bottom of the nozzle, i.e. the connection plane to the tube, they can be arranged such that the microholes are aligned one over another or they can be staggered, wherein the staggered position need not be centred with respect to the row below and/or above, but can be shifted between the centred arrangement and the aligned arrangement as seen fit.

By these modifications to the nozzle of the liquid tube, it is possible to create liquid jets having smaller droplets than without modifications which then come into contact with the plasma discharge, thus increasing the contact area in the interface, where the reaction takes place. Depending on the respective conditions, the droplet size preferably ranges between 10 µm and 1 mm, wherein the sizes are given as respective average diameter, preferably determined by high resolution imaging.

Furthermore, in the context of the present invention it was found that the inner system of the plasma reactor can advantageously be passivated, that is in particular the inner surface of the outer tube's tip (jet tip) and the outer surface of the inner tube's dispensing nozzle, where the liquid is in contact with the plasma, or in the immediate vicinity of the nozzle, within the zone where the plasma and liquid phases come into contact or first come into contact.

The passivation can in preferred embodiments be carried out by feeding air into the plasma for ignition, which in contact with liquid, leads to a passivated surface of the metallic tube for liquid, and also the inner conductor tube, and plasma jet cylinder tip, where the plasma is formed. In preferred embodiments of the present invention, instead of feeding argon, air or a mixture of nitrogen and oxygen is fed into the plasma jet generating a nitrogen/oxygen plasma. This reactant mixture, in contact with liquid water, creates an oxidant environment, passivating the metallic material of the dispensing tube for the water.

The passivation is particularly beneficial for avoiding decomposition of compounds like hydrogen peroxide.

Additionally, the plasma-liquid (or plasma-gas) medium is cooled down using a heat exchanger. In particular, the heat exchanger incorporates extended surface features designed to increase the effective heat transfer area. These may include, but are not limited to, fins, pins, lattice structures, or conformal cooling channels. The cooling device can in preferred embodiments be prepared by metal additive manufacturing, e.g. 3D-printing.

For the specific case of H₂O₂ synthesis from water, a number of parameters were identified in the context of the present invention that provide for particularly good results. These are both individually as well as in combination: a range of nanosecond pulsations, water flow and gas:liquid ratios in which the specific energy input into the system is enough to improve the production of H₂O₂ via the desired recombination reactions and electron impact routes.

Some important aspects of the present invention are the following:
1. Versatile feedstocks: The reactors of the present invention can process gases or water and various other liquids, such as alcohols, organic solvents, or aqueous mixtures, into valuable chemicals. For example, and preferably, it enables the direct synthesis of H₂O₂ from water in a cleaner process than the industrially dominating anthraquinone process.
2. Reduction of hazardous compounds: Synthesis of H₂O₂ and other chemicals from liquid compounds using the technology of the present invention minimizes harmful by-products and eliminates the need for additional hazardous reagents, and it reduces dependency on critical or exotic materials in the process.
3. Improved global efficiency: the present invention uses thermally modulated plasmas like nanosecond pulsed microwave plasma to initiate chemical reactions at milder conditions, improving energy efficiency and reducing the cost of production.
4. On-demand, decentralized production: The present invention allows on-demand production of chemicals (e.g. H₂O₂) at the site of use due to the plasma system's rapid activation and deactivation within seconds. Thus eliminating the need for transportation and storage. This improves safety and accessibility for industries with limited infrastructure or in remote locations.
5. Compatibility with intermittent power: The plasma system's rapid activation and deactivation within seconds allow it to operate effectively with intermittent electricity sources, improving renewable energy usage and grid flexibility.
6. Modular and scalable: This present invention's design supports scalability for small or large operations and modularity for deployment in diverse industries, from specialty chemical synthesis to large-scale water treatment.
7. Enhanced plasma-feedstock interaction: The reactor's innovative design improves mixing between plasma and liquid or gas feedstocks, optimizing energy and mass transfer and intensifying chemical reactions.
8. In-situ regeneration and passivation: The present invention allows for the on-site regeneration or passivation of materials in contact with the reacting mixture which maximizes the yield of products.

As advantages of the present invention, the following may further be mentioned:
- The present invention can in some embodiments reach yields of up to 100 mmol/l hydrogen peroxide when using water flow rates of 0.2 ml/min, or even (much) higher.
- The present invention allows continuous plasma-water systems tuning energy input more effectively through thermally modulated plasmas like nanosecond pulsation of micro-waves.
- The present invention works with H₂O₂-concentrations above 50 mmol/l.
- The present invention offers more flexibility of set-up in comparison to prior art. The present invention does not depend on a dielectric material, an electrode or an exotic catalyst (like Pd or Pt) in order to successfully operate which overall results in an expensive system and, accordingly, preferably contains neither of those in the plasma reactor.
- The present invention, by the step of thermally quenching the products from the plasma reaction, hinders the routes for secondary undesired reactions towards H₂O which diminish efficiency, thus resulting in improved H₂O₂ yields. It was found in the context of the present invention that a quenching step is of great importance to suppress decomposition of the H₂O₂ formed, in particular if the cooling device, in particular with its upper section, is in contact with the plasma-liquid (upper in this context means the part that is next to the exit of the product stream as the device is usually oriented downwards; if the plasma device is e.g. horizontally arranged from left to right, upper would mean leftmost with relation to the ground). This means, in particular, that a cooling device is positioned below the plasma flame, at a distance that ensures the contact of the cooling device with the plasma-liquid reacting mixture, in particular with its upper section. This distance can be measured from the tip of the nozzle of the torch, and the cooling device can be in direct contact with the nozzle of the torch or displaced by a distance of, in preferred embodiments, 1 to 5 mm away from the surface of the nozzle of the torch. In some embodiments preferably at a distance of 1 mm away and ensuring that the body of the cooling device, in particular its upper section, is contacting the volume of plasma-liquid reacting mixture. A preferred cooling device of the present invention is a cooling coil. At least the upper section of it, i.e. the outside of its upper windings is in contact with the plasma-liquid reacting mixture. Depending on the orientation of the coil, it is possible that the product stream passes through the centre of the coil or does not, e.g. flows around some or all of the windings, if the coils are arranged in a transverse orientation to the direction of the product stream.
- Furthermore, the produced H₂O₂ is stabilized after its formation and immediate quenching.

The present invention's reactor and process can be used/employed in various technical fields, inter alia the following:
- Chemical Industry: for example, polymer precursor preparation;
- agriculture: for example, irrigation, post-harvesting processing, greenhouses;
- food and beverage: for example, process water; packaging disinfection;
- disinfection of surfaces and medical equipment;
- production of propellants;
- electronics: for example, as cleaning agent (in particular for decentralized applications, as it is advantageous to avoid transporting hydrogen peroxide and instead use an on-site source capable of generating this oxidant in situ).

In preferred embodiments, the plasma jet used in the present invention does not comprise tungsten.

In preferred embodiments, the method of the present invention is conducted without the use of catalysts nor additional additive into the liquid to be processed, in particular water.

The individual parts of the present invention's respective devices, as well as their parts are in operative connection with each other in a customary and known manner.

The various embodiments of the present invention, e.g. - but not exclusively - those of the various dependent claims or individual embodiments described in the figures, may be combined with one another in any desired manner, provided such combinations do not contradict one another.

### Figures:

The embodiments of the present invention will be explained in more detail below with reference to the drawings (figures) representing various preferred embodiments. Many of the features or embodiments shown below in individual figures can be combined with features and embodiments shown in other figures or the remainder of the description, particularly where the features are described accordingly.

Moreover, the figures are not to be construed as limiting and are not to scale. Furthermore, the figures do not contain all the features that conventional devices have but are reduced to the features that are essential for the present invention and its understanding, for example screws, cables etc. are not shown or not shown in detail.

Identical reference signs/numbers mean identical or identically acting device parts.

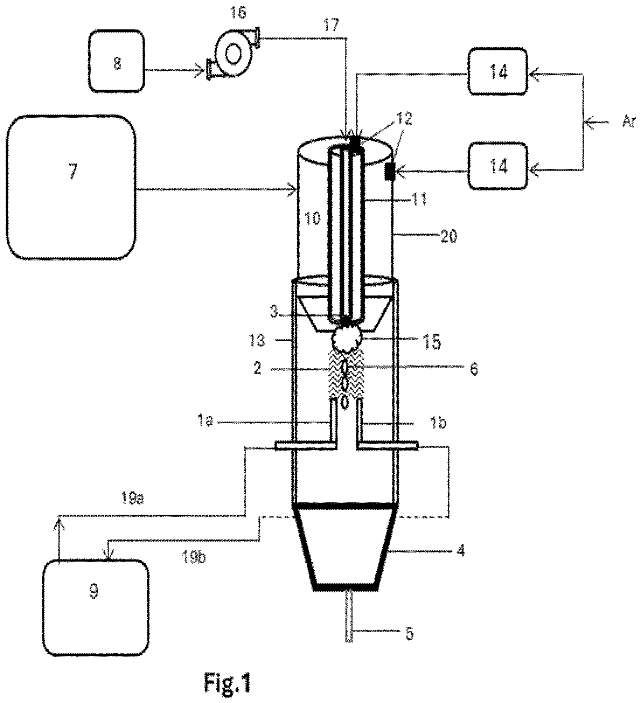

Figure 1 provides a schematic representation of an exemplary setup according to the invention (which was also used for the example 1 described below). Depicted is a reactor comprising, inter alia, a housing having a main part **13** and a tip 4 (can also be called housing tip or reactor tip), a plasma jet having an inner tube 3 (which is depicted here with a flat dispensing nozzle), an inner conductor **11**, an outer chamber **10,** gas inlets **12**, and an outer tube **20.** Argon **Ar**, or another inert gas, is fed, with the aid of mass flow controllers **14,** into the plasma jet via the outer chamber **10** and through the inner conductor **11** via gas inlets **12.** The liquid to be processed (reaction medium), preferably water, is kept in a reservoir 8 and using a pump **16** is fed to the reactor as the reaction medium feed (water feed) **17.** The various species of the reactant mixture (gas and liquid) interact only downstream of the dispensing nozzle of the plasma jet, that is the plasma-liquid interaction zone **15**, where the plasma formation occurs due to electromagnetic field concentration. The liquid product **6**, that is formed in the plasma-liquid interaction zone **15**, is collected downstream, leaving the reactor through a product outlet 5 located (in this case) at the bottom of the tip of the reactor **4.** To prevent thermal decomposition of the product, in particularly hydrogen peroxide, thermal quenching of the liquid leaving the plasma-liquid interaction zone **15** is done using a heat exchanger or cooler 2 through which a cooling medium is fed via the cooling liquid feed line **19a** and the cooling medium inlet **1a**, in particular water, from a chiller **9.** The water leaving the heat exchanger or cooler is fed back to the chiller 9 via cooling liquid outlet **1b** and cooling liquid feed line **19b.** The heat exchanger is located below the plasma-liquid interaction zone **15.** The microwave power can be modulated down to the nanosecond pulsations by the microwave source 7 to allow a relatively low temperature plasma.

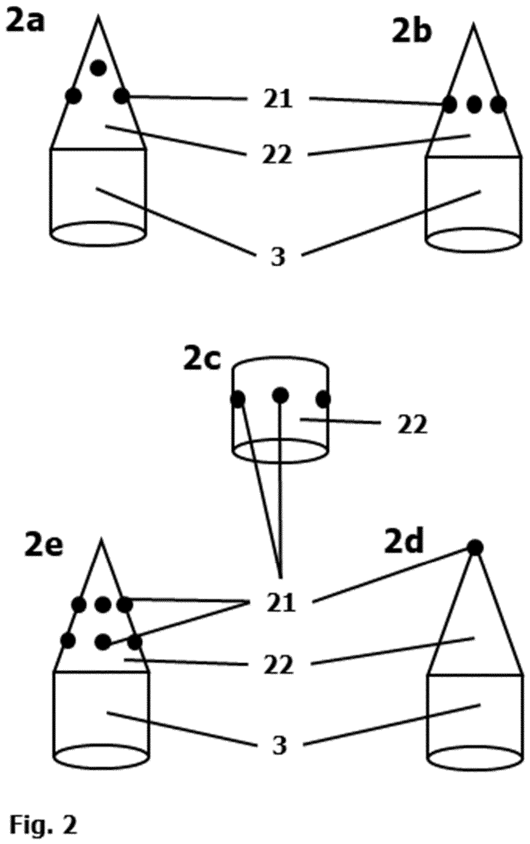

Figure 2 (very) schematically shows various different modified dispensing nozzles **22** of the plasma jet's inner tube. In Fig. 2, the microholes are each time represented by filled black circles.

In Fig. 2a (upper left), a conical modified dispensing nozzle **22** is shown at the end of the inner tube 3 (only a part of which is shown). The dispensing nozzle **22** has four microholes **21** in two pairs of opposing microholes **21** at two different heights (in two rows of two at two different heights) around the circumferential surface of the dispensing nozzle **22** (only three of the microholes **21** are visible, as the last one (of the upper row) would lay on the back of the dispensing nozzle 22), kind of like a zig-zag pattern. This "zig-zag nozzle" uses four microholes in a conically shaped nozzle, wherein two microholes are located at a first distance from the bottom of the nozzle (i.e. a first height when seen from the connection plane to the inner tube) and two other microholes are located at a second height further away from the bottom of the nozzle and displaced 90° in relation to the first row of two microholes. This means that two pairs of opposite microholes are present, which are present at two different hights of the nozzle.

In Fig. 2b (upper right), another conical modified dispensing nozzle **22** is shown at the end of the inner tube 3 (only a part of which is shown). The dispensing nozzle **22** has four microholes **21** in one row around the circumferential surface of the dispensing nozzle **22** (only three of the microholes **21** are visible, as the last one would lay on the back of the dispensing nozzle 22). This crown-like nozzle configuration employs one row of four microholes, separated each 90° around the conically shaped nozzle, i.e. equidistantly from each other arranged at the height.

In Fig. 2c (middle), a flat modified dispensing nozzle **22** is shown. The dispensing nozzle **22** has four microholes **21** in one row around the circumferential surface of the dispensing nozzle **22** (only three of the microholes **21** are visible, as the last one would lay on the back of the dispensing nozzle 22). This flat nozzle represents geometry of a normal, standard tube with a closed end cylinder-shaped nozzle having four microholes on the side of the cylinder, at a given height away from the bottom of the nozzle in a row around the nozzle and preferably located each 90° (i.e. spaced apart from each other equidistantly) around the cylinder nozzle.]

In Fig. 2d (lower left), yet another conical modified dispensing nozzle **22** is shown at the end of the inner tube 3 (only a part of which is shown). The dispensing nozzle **22** has eight microholes **21** in two rows of four each at two different heights around the circumferential surface of the dispensing nozzle **22** (only six of the microholes **21** are visible, as one of each row would lay on the back of the dispensing nozzle 22). This double row arrangement (also designated by "DR" in this application) has two parallel rows of four microholes each, located on a conically shaped nozzle, wherein the first row is at a first hight of the nozzle and the second row at a second height and the microholes are preferably spaced apart equidistantly to each other in each respective row of microholes.

In Fig. 2e (lower right), still another conical modified dispensing nozzle **22** is shown at the end of the inner tube 3 (only a part of which is shown). The dispensing nozzle **22** has one microhole **21** at the very top of the dispensing nozzle **22.**

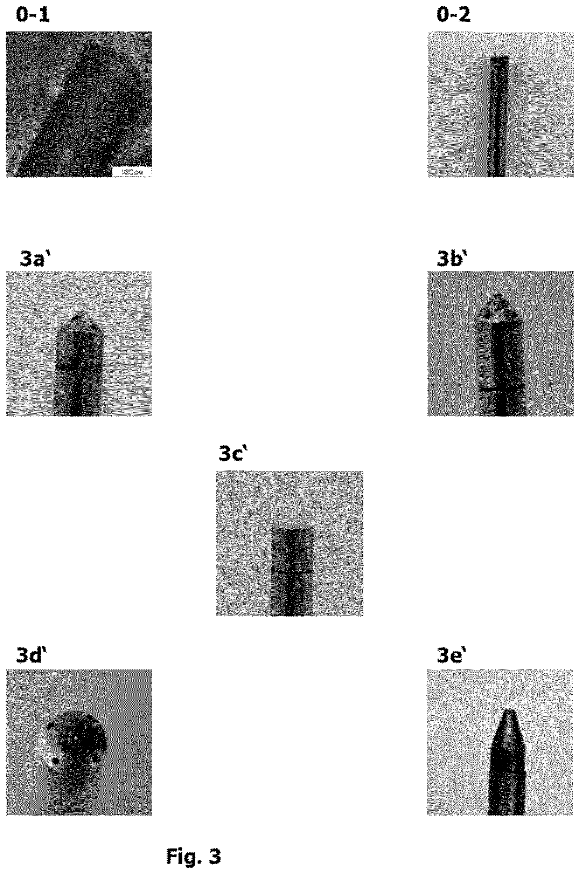

Figure 3 shows in a', b', c', d' and e' photographs of various different modified dispensing nozzles according to the present invention, wherein the respective photographs correspond to the respective letters in Fig. 3, i.e. the photographs are of actually prepared dispensing nozzles.

In photo 0-1 of Fig. 3., an inner tube of a commercially available plasma jet is shown. It can be seen that the inner tube is basically only a tube that just ends and the opening through which the reaction medium (water) exits has a diameter that is the inner diameter of the inner tube.

In photo 0-2 of Fig. 3., an oxidised inner tube of a commercially available plasma jet is shown as comparison in order to illustrate that in standard processes such tubes tend to oxidise rather quicky when they are used in the formation of hydrogen peroxide from water. This nozzle was a 1.8 mm (outer diameter) stainless steel tube with an open end with an inside diameter of 1.2 mm.

As can be seen from a comparison of photos 0-1 and 0-2 - according to the prior art - on the one hand with photos a' to e' - according to the present invention - on the other hand, the present invention leads to improved results with respect to better mixture of fluids due to improved number and geometry of holes and, further, less oxidation of the inner tube due to passivation.

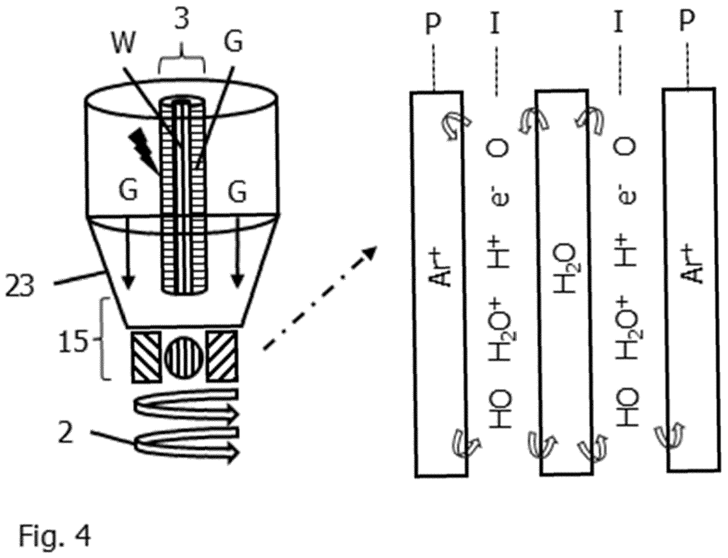

Figure 4 shows, schematically, a section through the end of a plasma jet, where it is shown how (inert) gas **G** and water **W** flow through the plasma jet.

Also schematically illustrated, by the flash-like symbol, is the microwave energy that is applied in the form of nanosecond pulses to the plasma jet.

The tip of the plasma jet **23** is the region of the plasma jet in which the inner tube **3** ends and the water and gas are mixed. Below the end of the inner tube **3**, the plasma-liquid interaction zone **15** (schematically illustrated by two rectangular blocks enveloping a round area, roughly representing the enveloping gas and the water, which, in reality, would of course not be separated this sharply but intermix) follows, in which the chemical reaction(s) take place.

For the specific case of the reaction of dosing water (H₂O) and Argon (Ar) through the plasma jet some of the interactions of the plasma interaction zone **15** are given in in a bit more detail on the right of the picture, where the three schematic parts of the left side of the figure are now expanded to (still very schematically) five regions, i.e. two enveloping gas/plasma regions **P** on the outsides in which, inter alia, positively charged argon species (Ar⁺) are present. In the middle there is a region in which the fed water **W** is present. Between these regions, there are two interface regions **I** in which species of the different regions interact. Some of the reactions of species present are given here and the interaction of species in relation to the regions are illustrated by the curved arrows. Of course, this is still very schematic as the interaction and mixing of the regions becomes greater with increasing distance from the dispensing nozzle, and the boundaries between the regions and the interactions of the species are never that clear as in this illustration.

Then, below the plasma-liquid interaction zone **15**, the cooling zone **2** follows (represented here by two curved arrows that should illustrate cooling medium flowing around), where the resulting product stream is cooled, whereby further reactions that could diminish the hydrogen peroxide yield are supressed.

Figure 5 shows a comparison of performance of tested nozzles over the concentration of H₂O₂.

It can be seen that with a modified nozzle (with a double row of microholes) higher yields can be achieved than with a normal nozzle.

Figure 6 shows a comparison between un-passivated and passivated nozzle over H₂O₂ concentration obtained by example 3.

The curves show the amount of hydrogen peroxide (in mmol/l) obtained in dependence of the time of active pulse (time-on) of the microwave pulses.

The curve with the squares illustrates the results for a passivated nozzle according to the present invention and the curve with the triangles illustrates the results for a standard, non-passivated inner tube according to the prior art.

It can be seen that employing the passivated nozzle in accordance with the present invention, higher hydrogen peroxide yields were achieved, proving the technical improvement reached by the passivation.

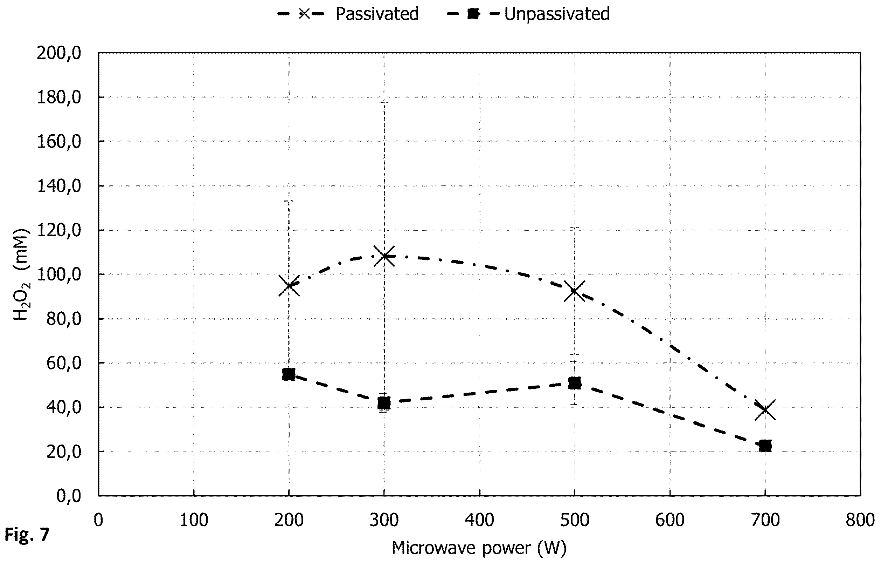

Figure 7 shows the results from a comparison of hydrogen peroxide production from water via the present invention's method with passivated nozzle versus unpassivated nozzle.

### List of reference signs

- 1a, 1b: cooling medium inlet and outlet
- 2: cooling zone/heat exchanger with inner flow of cooling medium (e.g. cooling coil)
- 3: inner tube (for feeding the liquid into the plasma-liquid interaction zone)
- 4: tip of housing (e.g. quartz glass enclosure) / tip of the reactor
- 5: product outlet
- 6: liquid product leaving the plasma-liquid interaction zone
- 7: microwave source with capacity for nanosecond pulsations of the microwave signal
- 8: water reservoir
- 9: chiller for feeding cold liquid into the heat exchanger
- 10: outer chamber of coaxial plasma jet
- 11: inner conductor of coaxial plasma jet
- 12: gas inlets
- 13: main part of housing (e.g. quartz glass enclosure)
- 14: mass flow controllers (MFC)
- 15: area below tip of plasma jet where the reactants mix (plasma-liquid interaction zone)
- 16: pump
- 17: reaction medium (feed) (water feed)
- 19a, 19b: cooling liquid feed line
- 20: outer tube
- 21: microhole
- 22: (modified) dispensing nozzle
- 23: plasma jet tip
- Ar: Argon (or other inert gas) feed
- G: gas
- I: interface (region)
- P: plasma (region)
- W: water

The invention is now described in more detail with reference to the following non-limiting examples. The following exemplary, non-limiting examples are provided to further describe the embodiments presented herein. Those having ordinary skill in the art will appreciate that variations of these examples are possible within the scope of the invention.

### Example 1:

The invention as reactor system for converting gas or gas-liquid mixtures using plasma ionic species, where the interface between the plasma and a liquid face occurs at the outlet of the reactor has been tested for the conversion of water to hydrogen peroxide as follows: The plasma reactor consisted of a coaxial jet (max 500 W, RF 4.310, HF-Technik GmbH) connected to a microwave source (max 1 kW, TRUMPF Hüttinger Microwave) via a coaxial cable (Fairview 7/16 DIN). Argon gas was fed into the plasma jet using mass flow controllers (MFC, Vögtlin), while liquid water was supplied through a stainless-steel tube (1.8 mm outside diameter) connected to a water pump (1 HM, Eldex). The gas flow was calculated in normal conditions using the Vögtlin MFC control software get read-y. To monitor the temperature of the reaction environment, a thermocouple was placed approximately 2 cm away from the plasma-water zone. An optical fibre connected to a UV-Vis detector (USB2000, Ocean Optics) allowed real-time monitoring of species during the plasma-water interaction.

All components (gas and liquid) interacted only at the dispensing nozzle of the plasma jet (or rather just downstream of it), where the plasma formation occurs due to electromagnetic field concentration.

The liquid product was collected downstream using a three-way valve attached to the product outlet, enabling specific sample collection as needed. To prevent thermal decomposition of the hydrogen peroxide, quenching of the plasma zone was achieved using a heat exchanger in the form of a cooling coil located below the plasma zone and inside the reactor housing. In this example the cooling medium for plasma quenching was deionized water at 18°C, but in the context of the present invention can, in principle, be any cooling liquid that is able to achieve the necessary cooling temperature. The water was fed using flows between 0.2 ml/min and 5 ml/min and a time of active plasma within a range of 100 ns up to 10 µs. The frequency of pulsation, called duty cycle, was also varied between 0.1 up to 0.9, and the power ranged between 100 W and 1 kW. In general, increasing the power input led to an increase of the H₂O₂ concentration, when the water flow rate is between 0.2 ml/min and 5 ml/min, under a specific set of parameters of 8.7 L/min of total argon flow, between 0.1 and 0.9 duty cycle and between 500 ns and 1200 ns time of active pulse (time-on), and using plasma quenching. The obtained hydrogen peroxide concentrations ranged from 0.5 mmol/l up to 50 mmol/l.

A detrimental effect of the microwave power increase over the hydrogen peroxide concentration was observed for experiments without quenching.

### Example 2:

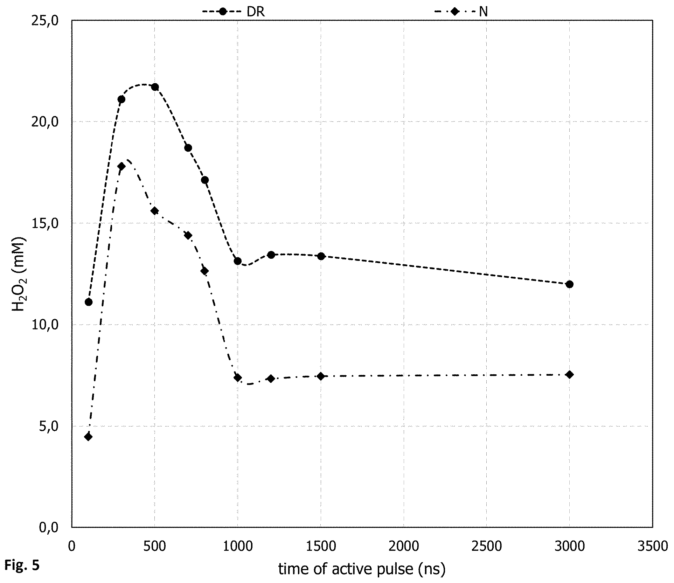

Further optimization experiments were conducted in which the liquid tube (inner tube) of the plasma jet was modified. To this end, the nozzles of the liquid dispensing tubes (inner tubes) were modified by drilling holes through the respective nozzles. A comparison between a standard and a modified tube is shown in Figure 5.

The tested nozzles were, on the one hand, a modified nozzle designated double row (DR) and, on the other hand, a normal nozzle (N).

The double row nozzle had two parallel rows of four microholes each (microholes of 200 µm diameter in this case), located on a conically shaped nozzle (cf. Fig. 2d and Fig. 3d').

The normal nozzle was of a 1.8 mm (outer diameter) stainless steel tube with an open end, and inside diameter of 1.2 mm.

For a comparison between the tested nozzles, a flow of 0.5 mL/min was used and the difference in performance is presented in Figure 5. The gas flow rate used was 8.7 L/min of argon, at 500 W of microwave power and 0.2 of duty cycle.

The result of this comparison is that with the modification significantly higher amounts of hydrogen peroxide were achieved than with an unmodified device.

This result can also be seen in Fig. 5.

### Example 3:

In another example, an in-situ passivation of the metallic reactor was carried out using a gas mixture of N₂:O₂ similar to the air composition for the plasma ignition in presence of the remaining water at the tip of the water tube for 1 hour. The gas outlet of the system was analysed spotting the presence of NO and NO₂. After the passivation, the system was cleaned with deionized water before conducting further experiments to study the effect on the H₂O₂ production.

In this example the microwave input power was 500 W, the duty cycle was 0.2, the flow rate of water was 0.2 ml/min, and the gas flow was 8.7 L/min. The normal nozzle was implemented to study a scan of microwave pulsation.

The results showed an increase in H₂O₂ concentration of up to about 90 mmol/l in average after passivation, at pulsation times between 500 ns and 700 ns, with maximum values of about 120 mmol/l. This is more than double of the previously achieved highest concentration of 50 mmol/l (without passivation).

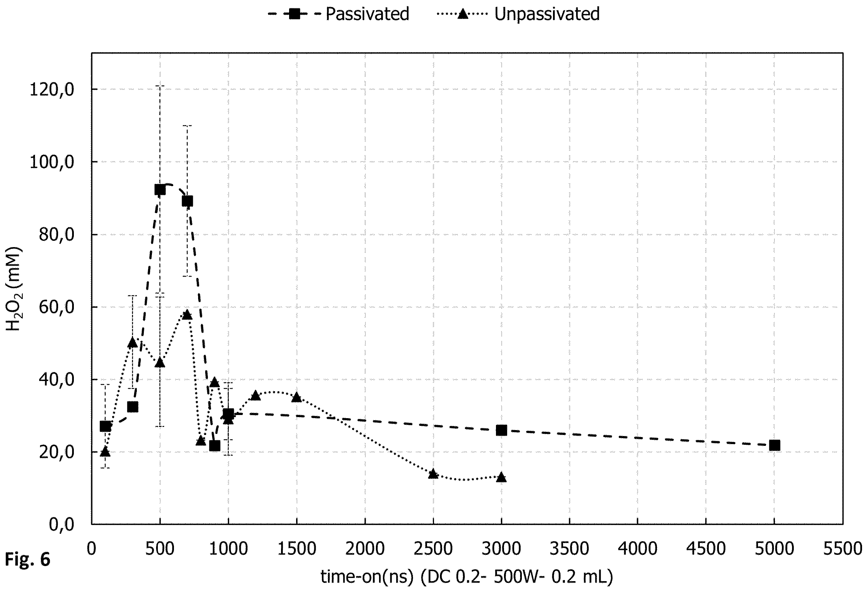

The improvement of H₂O₂ concentration after passivation of the nozzle is presented in Figure 6.

### Example 4:

In another example, the nozzle was passivated by being exposed to a plasma gas composition of nitrogen and oxygen in a ratio of N₂:O₂ and a total flow of 6 L/min. After passivation of the normal nozzle, the variation of the microwave power was studied at 500 ns of time on, 0.2 mL/min of water, 8.7 L/min gas flow versus a normal but nozzle that was not passivated. It was found that nozzles that were passivated lead to higher yields of hydrogen peroxide than normal ones.

The results are also shown in Figure 7.

### Summarising the examples

As a result, higher hydrogen peroxide yields were achieved with the present invention both by the method with passivation of the nozzle and without. If the nozzles were passivated in addition to their inventive modification even better results are achieved than with the embodiment without such passivation. For example, yields exceeding 150 mmol/L were reached in some experiments. This is three times higher than concentrations reported for electrochemical on-demand hydrogen peroxide production systems by the company HP-Now (0.17 wt.%, corresponding to about 51 mmol/l).

Experiments falling under the scope of the present invention are also described in the yet to be published article "Overcoming thermal degradation during continuous conversion of water into hydrogen peroxide in a flexible plasma reactor" and the corresponding supplementary Information by Mery S. Hernandez, Yannis Mikolaiczyk, Sergey Soldatov, Guido Link, Lucas Silberer, Roland Dittmeyer, Alexander Navarrete. Therein some figurative representations of the experimental data and results can be found.

## Claims

1. Reactor comprising:
a) a plasma jet comprising
- an inner tube for dosing liquid having a dispensing nozzle through which the liquid is dispensed,
- an outer tube arranged to surround the inner tube while leaving a gap between its inner surface and the outer surface of the inner tube, for dosing inert gas, through the gap,
wherein
- the outer tube has a jet tip region with gradually narrowing dimensions to concentrate the liquid, the gas and the electrical fields, and
wherein
- the outer tube is longer than the inner tube so that the end of the inner tube's dispensing nozzle reaches into the jet tip region but does not reach to the narrowest part of the jet tip region,
and wherein
- the inner space between the dispensing nozzle and the inner surfaces of the jet tip region forms a plasma ignition zone;
b) a plasma cooling device arranged downstream of the plasma jet;
c) a housing in which the plasma jet and the cooling device are accommodated.

2. Reactor according to claim 1, **characterized in that** the inner tube for dosing liquid comprises a modified dispensing nozzle.

3. Reactor according to claim 1 or 2, **characterized in that** the inner system of the reactor is passivated, particularly the outer surface of the dispensing nozzle and the inner surface of the jet tip, preferably by contacting the surfaces to be passivated with a gas selected from oxygen, nitrogen and mixtures thereof, more preferably a nitrogen-oxygen mixture, preferably in ratios between 4:1 and 1:4, more preferably 3.75:1, in particular in a ratio of 1:1.

4. Reactor according to any one of claims 1 to 3, **characterized in that** the cooling device has a special geometry, adapted to rapidly cool substances passing by/through it, preferably has the form of a cooling coil.

5. Reactor according to any one of claims 1 to 4, **characterized in that** it comprises a microwave source for providing the energy for forming the plasma in a pulsed manner, preferably nanosecond pulses.

6. Continuous process for conducting a chemical reaction with the aid of a plasma jet, the process comprising
- providing a reactor according to any one of claims 1 to 5; and
- supplying a liquid to the inner tube; and
- supplying gas to the outer tube; and
- providing power to the plasma jet by a microwave source; and
- immediately after the plasma-liquid interaction zone, cooling the product stream to a temperature of between 100°C to 20°C; and
- collecting the product stream;
- optionally separating the desired product from other components of the product stream;
- and optionally recycling some or all of said other components,
wherein the microwave power is supplied in pulsed form

7. Process according to claim 6, **characterized in that**
- the reaction is the preparation of hydrogen peroxide from water; and
- the liquid is water;
- the gas is an inert gas, preferably selected from the group consisting of air, nitrogen, oxygen, helium, argon, and mixtures thereof, in particular argon; and
- the product is cooled to a temperature of between 100°C to 20°C.

8. Method according to claim 7, **characterized in that** any, some or all, preferably all of the following parameters are set:
i) flow rate water of from 0.05 ml/min to 5000 ml/min, preferably from 0.05 ml/min to 100 ml/min, in particular from 0.05 ml/min to 10 ml/min; and
ii) flow rate gas of from 1 L/min to 20 L/min, preferably 2 I/min to 10 I/min;
and
iii) microwave input power applied to the plasma jet of from 100 W to 50 kW, preferably from 100 W to 1000 W; and
iv) time of active pulse of the microwave pulses of from 100 ns to 10000 ns;
and
v) time of complete period of from 150 ns to 11000 ns; and
vi) duty cycle, being the fraction of time of active pulse over the complete period, of from 0.1 to 0.9.

9. Use of the reactor according to any one of claims 1 to 5, or the method according to claim 6,
- for converting gases or liquids, preferably water or other liquids, particularly water, alcohols, organic solvents, aqueous mixtures, into valuable chemicals in particularly selected from the group consisting of hydrogen peroxide, nitric acid, ammonia, methanol and mixtures thereof;
- in particular for the direct synthesis of hydrogen peroxide from water.
